# FASCICULE DE BREVET EUROPEEN

(11) **EP 1 617 987 B1**
(45) Date de publication et mention de la délivrance du brevet: **12.04.2017**
(21) Numéro de dépôt: 03815838.2
(22) Date de dépôt: 24.12.2003
(51) Int. Cl.: B29C 55/16

(54) **DISPOSITIF POUR L'ETIRAGE SIMULTANE DE FILMS DANS LE SENS LONGITUDINAL ET DANS LE SENS TRANSVERSAL**
VORRICHTUNG ZUM SIMULTANSTRECKEN VON FOLIEN IN LÄNGSRICHTUNG UND IN QUERRICHTUNG
SIMULTANEOUS LONGITUDINAL AND TRANSVERSE FILM DRAWING DEVICE

(30) Priorité: 15.01.2003 FR 0300400
(43) Date de publication de la demande: 25.01.2006
(73) Titulaire: Andritz Biax S.A.S., 73382 Le Bourget du Lac (FR)
(72) Inventeur: MARCHANTE MORENO, Innocente, F-73370 Le Bourget du Lac (FR); TRIVERO, Gilbert, F-73800 LA Chavanne (FR)
(74) Mandataire: Schwabe - Sandmair - Marx
(86) Numéro de dépôt international: PCT/FR2003/003901
(87) Numéro de publication internationale: WO 2004/071748

(56) Documents cités:
- DE-A- 3 741 572
- DE-A- 3 741 582
- FR-A- 2 686 041
- GB-A- 1 004 563
- US-A- 3 148 409

## Description

La présente invention concerne un dispositif mécanique pour l'étirage simultané de films en matière synthétique dans le sens longitudinal et dans le sens transversal, aussi désigné plus simplement comme "dispositif d'étirage simultané de films".

Les films de matière synthétique bi-orientés sont obtenus à partir d'un ruban extrudé, après que de la matière à l'état fondu a été déposée sur un tambour de coulée refroidi de façon à ralentir la cristallisation du film et à permettre son étirage ultérieur.

Le ruban passe ensuite dans une machine d'étirage longitudinal, dans laquelle l'étirage est réalisé sur le principe d'une différence de vitesse entre différents cylindres successifs. Le ruban passe ensuite dans une machine d'étirage transversal, dans laquelle le ruban est tenu par des pinces montées sur des chaînes, dont l'écartement augmente progressivement.

Ce type d'étirage, dit étirage séquentiel, convient parfaitement à de nombreuses matières synthétiques telles le polypropylène, le polyester, et il est donc largement utilisé dans l'industrie.

Par contre, d'autres types de film, tels que ceux en polyamide et en polyéthylène, sont caractérisés par le fait que de façon à obtenir les caractéristiques demandées par leur utilisation ultérieure, l'étirage dans le sens longitudinal et l'étirage dans le sens transversal doivent avoir lieu simultanément et non pas, comme indiqué ci-dessus, de façon séquentielle.

Une raison bien connue qui impose cet étirage simultané est que certains produits ont tendance, dès qu'ils sont étirés, à cristalliser, gelant ainsi leur structure moléculaire et la rendant inapte à un deuxième étirage.

Pour cette raison, de très nombreux dispositifs dits d'étirage simultané, c'est-à-dire qui réalisent de façon simultanée l'étirage dans le sens longitudinal et l'étirage dans le sens transversal, ont été déjà proposés. Ces dispositifs peuvent se classer en deux groupes, à savoir d'une part les dispositifs d'étirage simultané dits mécaniques, et d'autre part les dispositifs d'étirage simultané sur base électronique.

Dans les dispositifs dits mécaniques, on distingue les dispositifs de type pantographe, et les dispositifs de type à vis à pas variable.

Ces dispositifs, qui mettent en jeu des conceptions mécaniques plus ou moins complexes, présentent le double inconvénient d'être mal adaptés à des vitesses de production élevées en raison justement de leur complexité mécanique, et de ne pas offrir de possibilité de réglage du taux d'étirage.

En effet, pour adapter les caractéristiques du film ou pour optimiser l'étirage particulier à chacun des produits étirés, il est nécessaire que les taux d'étirage transversaux, mais surtout longitudinaux, puissent être réglés de façon simple. Dans les dispositifs mécaniques énoncés ci-dessus, on conçoit aisément que si le taux d'étirage transversal peut être relativement facilement adapté par écartement des rails supportant les pinces de tenue du film, il n'en est pas de même de l'étirage longitudinal qui nécessite que soit modifiée la façon dont les pinces s'écartent progressivement l'une de l'autre dans le sens longitudinal lors de l'étirage transversal.

Les dispositifs du type pantographe sont en général complètement figés, c'est-à-dire qui ni les taux d'étirage longitudinaux, ni les taux d'étirage transversaux ne peuvent être réglés.

Les dispositifs de type à vis à pas variable peuvent éventuellement être réglés par remplacement de la vis à pas variable qui règle la façon dont s'écartent progressivement les pinces.

Il est aisément compréhensible que le changement des vis guides pour régler le taux d'étirage est une opération lourde qui nécessite l'arrêt de la machine, l'ouverture de ses organes principaux et donc un arrêt de production d'environ une journée au minimum.

Pour les raisons indiquées ci-dessus, les dispositifs d'étirage simultané mécaniques sont de moins en moins utilisés.

Pour remédier aux inconvénients, exposés ci-dessus, des dispositifs mécaniques, ont été développés plus récemment les dispositifs d'étirage simultané sur base électronique, tels que celui décrit dans le brevet européen 0 760 739 (BRUCKNER), dans lequel les pinces successives, tout en restant guidées par des rails dont l'écartement est variable pour obtenir le taux d'étirage transversal voulu, ne sont plus reliées entre elles par aucun organe mécanique du type chaîne. Dans ce cas, l'entraînement des pinces assurant le transport du film à étirer est assuré pour chaque pince (ou pour chaque groupe de pinces) par un moteur individuel équipant chaque pince (ou chaque groupe de pinces), du type moteur linéaire. Dans ce type de moteur, la fréquence du courant d'alimentation des moteurs linéaires animant chaque pince détermine la vitesse de déplacement de la pince sur le rail, une variation appropriée des fréquences de deux moteurs qui correspondent à deux pinces successives permettant de ce fait de faire évoluer progressivement la vitesse de déplacement linéaire de chaque pince sur le rail et donc le taux d'étirage longitudinal.

Ces dispositifs présentent certainement l'avantage de permettre théoriquement de grandes vitesses de production, et ils répondent également théoriquement parfaitement à la demande de l'industrie de pouvoir régler facilement et en continu pendant la production le taux d'étirage longitudinal, puisqu'il suffit en effet de faire varier la fréquence de base pour augmenter la vitesse de production et la variation de fréquence entre deux pinces pour faire varier l'écartement relatif de deux pinces, donc le taux d'étirage longitudinal.

Les dispositifs sur base électronique tels que décrits ci-dessus, ont effectivement été réalisés dans un certain nombre de cas, principalement pour des machines de laboratoire, et ont d'une manière générale donné satisfaction pour ce genre d'application.

Par contre, leur utilisation sur des machines de production destinées à l'industrie a très vite fait apparaître un certain nombre de contraintes qui en limitent pratiquement l'utilisation à des films très spéciaux à haut prix.

Le premier inconvénient résulte du prix très élevé de ces dispositifs eux-mêmes, en raison de la complexité des systèmes électroniques utilisés pour faire varier les fréquences de commande du moteur de chaque pince comme indiqué ci-dessus.

Un inconvénient supplémentaire est vite apparu qui résulte du fait que le rendement énergétique des moteurs linéaires dépasse difficilement 0,5, ce qui fait qu'environ la moitié de l'énergie qui est nécessaire à l'entraînement des pinces et qui croît très vite lors de l'augmentation des vitesses de production, est transformée en chaleur à l'intérieur de chacun des moteurs linéaires, et que de ce fait ces moteurs doivent être refroidis à l'intérieur du four dans lequel se déplacent les pinces, par exemple par circulation d'eau.

Ces dispositifs sont aussi extrêmement sensibles à la pollution des organes de guidage par les additifs qu'il est nécessaire d'introduire dans la plus grande partie des films d'emballage (additifs glissants, anti-statiques, etc...) et qui présentent pratiquement tous la caractéristique de se sublimer pendant l'étirage transversal sous l'action commune de la température et de l'augmentation de surface résultant de l'étirage, puis de se condenser sur le premier organe froid qu'ils rencontrent-c'est-à-dire, dans le cadre de ce type de machine, justement sur le rail qui doit être refroidi.

Il est aisément compréhensible que cette pollution des rails rend progressivement difficile et rapidement quasi-impossible d'avoir la certitude que les pinces, dont le synchronisme est assuré sans présence d'organe mécanique, resteront synchrones entre le bâti droit et le bâti gauche de la machine, l'absence de synchronisme provoquant immédiatement des plis et des déchirures du film.

Pour les raisons indiquées ci-dessus, les dispositifs d'étirage simultané sur base électronique, avec moteurs linéaires ont vu leur utilisation limitée soit à des usages de laboratoire, soit lorsqu'ils sont utilisés de façon industrielle à des films extrêmement spéciaux tels que des films polyester ultra-minces. Par contre, l'utilisation de tels dispositifs peut difficilement être envisagée pour la production de films industriels d'utilisation large.

Le document US-A 3,148,409 concerne un dispositif constitué par des chaînes de tension à organes de retenue, par exemple des griffes, pour l'allongement de matières en bande, par exemple de matière synthétique, simultanément dans le sens de la largeur et dans le sens de la longueur. L'invention réside dans le fait que chacune des deux chaînes disposées sur les côtés du ruban de matière est constituée par des barres (barres d'articulation) repliables en zigzag et ar ticulées les unes aux autres à la manière d'un mètre pliant et ces barres portent, d'une part, les organes de support de la bande de matière et, d'autre part, des appendices de guidage à l'aide desquels elles s'appliquent par leurs côtés opposés contre des plans de guidage limitant l'extension de la chaîne articulée.

Le document GB-A 1,004,563 concerne un appareil pour l'étirement longitudinal et simultanement lateral d'une bande d'un matériau étirable, tel qu'un film. Cet appareil est caractérisé par le fait qu'une chaîne tournante sans fin est disposée de chaque côté du parcours sur lequel le film peut être étiré, les chaînes comprenant des maillons d'égale Ion gueur qui sont reliés entre eux de façon articulée, que les moyens de préhension sont reliés aux chaînes de façon telle qu'à une -xrticuiation sur deux de chaque chaîne est relié un organe de préhension séparé et que des gouttières de guidage, groupées par paires, sont prévues de part et d'autre du par cours d'étirage et que, de chaque paire, la gout tière de guidage la plus proche du parcours d'éti rage guide les articulations auxquelles sont reliés les moyens de préhension, tandis que l'autre gout tière de guidage, quia une disposition convergente relativement à fa première, guide les articulations dépourvues de moyens de préhension de la chaîne considérée, sur au moins une partie du trajet que doit parcourir cette chaîne.

La présente invention vise à éliminer les inconvénients précédemment exposés tant des dispositifs mécaniques que des dispositifs sur base électronique, et ainsi l'objectif de la présente invention est de mettre à la disposition de l'industrie un dispositif d'étirage simultané permettant l'obtention de vitesses de production élevées telles qu'elles sont réclamées à l'heure actuelle par l'industrie, tout en permettant un réglage stable du taux d'étirage transversal et du taux d'étirage longitudinal, à l'arrêt ou pendant la production des films.

A cet effet, l'invention a essentiellement pour objet un dispositif mécanique pour l'étirage simultané de films dans le sens longitudinal et dans le sens transversal, avec utilisation de pinces successives pour le maintien, le transport et l'étirage du film, les pinces étant supportées et guidées par des rails, et entraînées en avant grâce à une chaîne sans fin reliant entre elles les pinces, la chaîne sans fin étant entraînée au moyen d'une ou plusieurs roues dentées, le dispositif d'étirage comprenant, sur chaque côté du film à étirer, une chaîne sans fin guidée sur deux rails d'écartement variable (E, e), la chaîne sans fin étant constituée par une succession de maillons articulés entre eux suivant des axes verticaux, les pinces étant liées à un axe sur deux ou montées entre deux maillons caracterisé en ce que la chaîne sans fin comprenant la succession de maillons articulés entre eux suivant des axes veticaux est entraînée en avant entre les deux rails de telle sorte que les pinces dépassant sur un côté de la chaîne, en étant guidées sur l'un des deux rails, tandis que des pièces de guidage sont liées à un axe sur deux ou montées entre deux maillons, entre les pinces, dépassant sur le côté opposé de la chaîne et se déplacent sur l'autre des deux rails, de telle sorte qu'en fonction de l'écartement, et/ou de la variation d'écartement de ces deux rails, les maillons successifs de la chaîne soient en alignement ou forment au contraire des angles les uns par rapport aux autres, de manière à fixer et/ou modifier la distance (d, D) entre les pinces successives.

De préférence, les pinces possèdent des corps articulés autour d'un sur deux des axes d'articulation verticaux des maillons successifs de la chaîne, tandis que les pièces de guidage sont articulées autour des autres axes d'articulation verticaux des maillons successifs de la chaîne, situés entre les axes d'articulation précédents.

Dans un mode de réalisation préféré, les deux rails d'écartement variable sont du type"monorail", et les corps des pinces d'une part, et les pièces de guidage d'autre part, sont avantageusement munis de galets d'axes verticaux roulant sur les deux faces latérales du rail correspondant, et d'au moins un galet d'axe horizontal roulant sur le sommet du rail correspondant. Un fonctionnement à grande vitesse est ainsi permis. Ainsi, la distance entre les deux rails, en chaque point du parcours d'une chaîne sans fin, détermine l'allure de cette chaîne et, en conséquence, la distance entre deux pinces successives. En particulier, un écartement faible entre les deux rails place les maillons de la chaîne en alignement, de sorte que la distance entre deux pinces successives est maximale. Au contraire, un écartement important entre les deux rails amène les maillons de la chaîne dans une configuration en "zig-zag", donc avec des maillons placés en oblique, de sorte que la distance entre deux pinces successives est réduite (éventuellement jusqu'à rendre jointives les pinces successives). Si l'écartement entre les deux rails varie, la configuration de la chaîne se modifie progressivement, en même temps que celle-ci est entraînée en avant, les angles formés par les maillons successifs s'ouvrant ou se fermant; il en résulte que la distance entre les pinces successives augmente ou diminue, de manière forcée et parfaitement déterminée par l'écartement des deux rails.

En particulier, si les deux rails se rapprochent, les angles entre les maillons successifs de la chaîne vont progressivement s'ouvrir, et les pinces successives s'éloigneront les unes des autres, ce qui détermine un étirage du film dans le sens longitudinal. Cette disposition peut être notamment retenue dans des portions divergentes des deux chaînes, placées de part et d'autre du
film, de telle sorte que dans la zone considérée, le film est étiré simultanément dans le sens longitudinal et dans le sens transversal, ce qui est ici le but recherché. Par contre, dans une disposition préférentielle, les deux rails sont parallèles entre eux et à la direction de transport du film, et possèdent un écartement maximal, dans une zone de préchauffage du film située en amont de la zone d'étirage, et ces deux rails sont parallèles entre eux et à la direction de transport du film, et possèdent un écartement minimal, dans une zone de stabilisation située en aval de la zone d'étirage.

Cependant, dans cette zone d'étirage, les deux rails peuvent aussi s'écarter, de sorte que les pinces y sont au contraire contraintes à se rapprocher, permettant ainsi l'obtention d'un taux d'étirage longitudinal "négatif" (ou taux de retrait), qui est demandé pour certains types de films.

Mis à part la structure spécifique de la chaîne, le dispositif d'étirage simultané, objet de l'invention, peut utiliser des pinces et des rails d'un type connu dans le domaine technique concerné, ce qui rend le dispositif réalisable aisément et économiquement, et d'un fonctionnement fiable. En particulier du fait de la liaison des pinces par la chaîne, donc par un type d'organe mécanique bien connu, le dispositif possède un caractère de fiabilité, et assure un synchronisme forcé entre les pinces, dans toutes les zones de la machine d'étirage, même en cas de pollution importante. De plus, les pinces peuvent être guidées sur les rails notamment par roulement, sans nécessité d'une lubrification abondante qui risquerait de polluer le film. Les rails utilisés présentent aussi l'avantage d'une très grande souplesse qui permet d'obtenir, sans que soit interrompue la continuité de guidage lors des changements de direction d'avance, des divergences pouvant atteindre des angles de 20° et même 25°, et facilement adaptables, ce qui permet des étirages soit progressifs, soit au contraire rapides, qui satisfont les exigences posées pour toutes les matières constitutives de films connues à ce jour.

Ainsi, dans l'ensemble, l'invention fournit une solution mécanique qui évite tous les problèmes actuellement posés par les dispositifs d'étirage simultané aussi bien mécaniques que sur base électronique.

L'invention sera mieux comprise à l'aide de la description qui suit, en référence au dessin schématique annexé représentant, à titre d'exemple, une forme d'exécution de ce dispositif d'étirage simultané de films :
Figure 1 est une vue d'ensemble très schématique, en plan par dessus, d'un dispositif d'étirage simultané conforme à la présente invention ;
Figure 2 est une vue en plan par dessus à plus grande échelle, correspondant à la zone A de la figure 1 ;

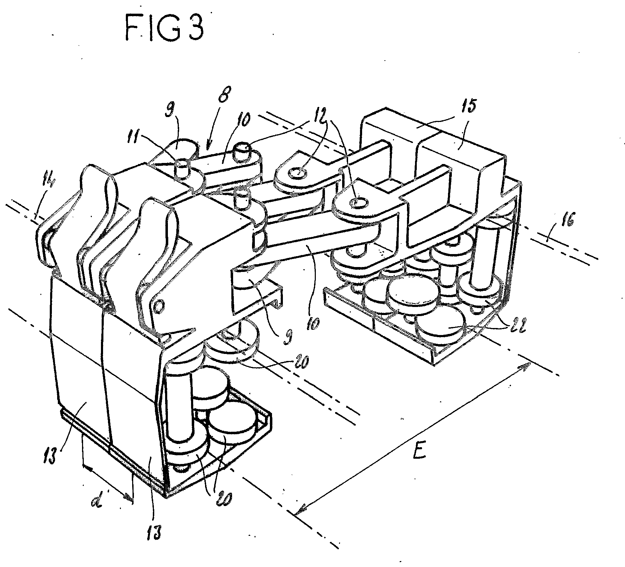

Figure 3 est une vue partielle, en perspective, d'une chaîne du dispositif avec ses pinces et ses pièces de guidage ;
Figure 4 est une vue en coupe transversale du dispositif ;
Figure 5 en est une vue de côté partielle, suivant la flèche F5 de la figure 2.

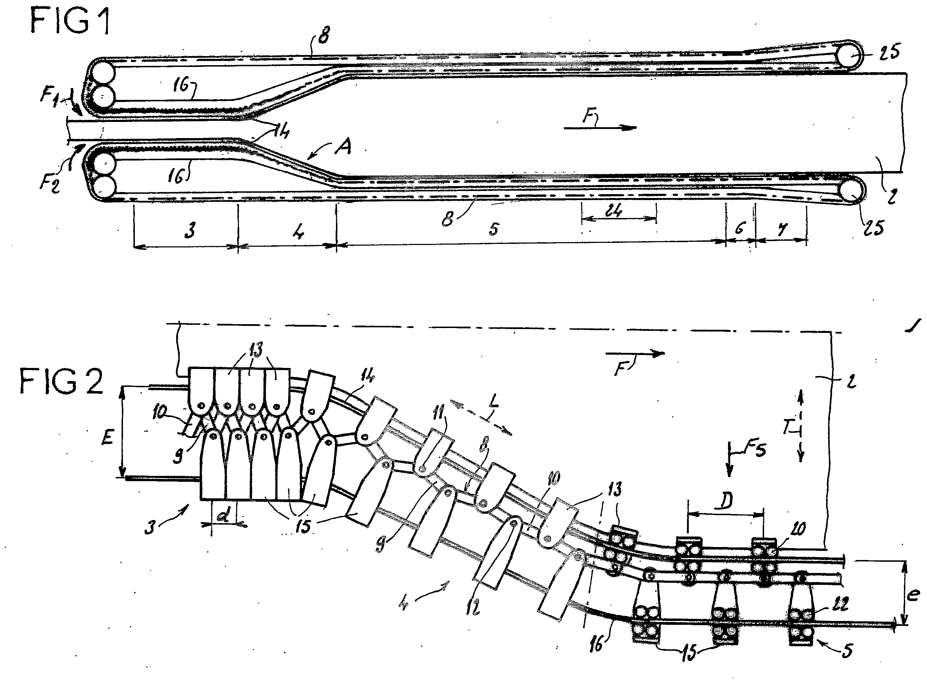

La machine d'étirage simultané de films, dont la figure 1 donne une vue d'ensemble très schématisée, possède une enceinte régulée en température (non indiquée sur cette figure), une telle enceinte étant bien connue dans le domaine industriel concerné. Cette enceinte possède une largeur utile qui peut atteindre et même dépasser une dizaine de mètres, et une longueur qui, en fonction de la vitesse de production souhaitée et de l'épaisseur du film 2, est généralement égale à plusieurs dizaines de mètres, et dans certains cas proche d'une centaine de mètres.

A l'intérieur de ladite enceinte, et d'amont en aval, on distingue une zone de préchauffage 3, une zone d'étirage 4, une zone de stabilisation 5, une zone neutre 6 et une zone de refroidissement 7. Le film 2 est transporté suivant la flèche F, de manière à parcourir successivement les zones successives 3 à 7, l'invention s'intéressant plus particulièrement à la zone d'étirage 4.

Pour maintenir et transporter le film 2, celui-ci est tenu par ses deux bords opposés au moyen de pinces, dont la structure est connue et peut, notamment, être conforme à celle décrite dans le brevet français 9200609/2686041 au nom du Demandeur. Ces pinces sont portées par des chaînes sans fin 8, disposées symétriquement par rapport à l'axe longitudinal de la machine d'étirage, dans un plan horizontal, et entraînées par des roues dentées suivant des flèches respectives F1 et F2. Les parties actives des deux chaînes sans fin 8 sont leurs brins intérieurs respectifs, qui comportent en particulier des parties divergentes correspondant à la zone d'étirage 4.

Les chaînes sans fin 8, et leurs moyens de guidage, sont maintenant décrits en se référant à la figure 2, qui montre le détail A de la zone d'étirage 4, ainsi qu'aux figures suivantes.

Chaque chaîne 8 est constituée par une succession de maillons désignés alternativement par 9 et 10, articulés entre eux suivant des axes verticaux désignés alternativement par 11 et 12.

Tous les deux maillons, c'est-à-dire au niveau de chaque axe 11 d'articulation entre un maillon 9 et un maillon 10, est articulée une pince 13, dépassant sur un côté de la chaîne 8 et guidée sur un premier rail 14. Egalement tous les deux maillons, mais entre les pinces 13 c'est-à-dire au niveau de chaque axe d'articulation 12, est articulée une pièce de guidage 15, dépassant sur le côté opposé de la chaîne 8 et se déplaçant sur un second rail 16.

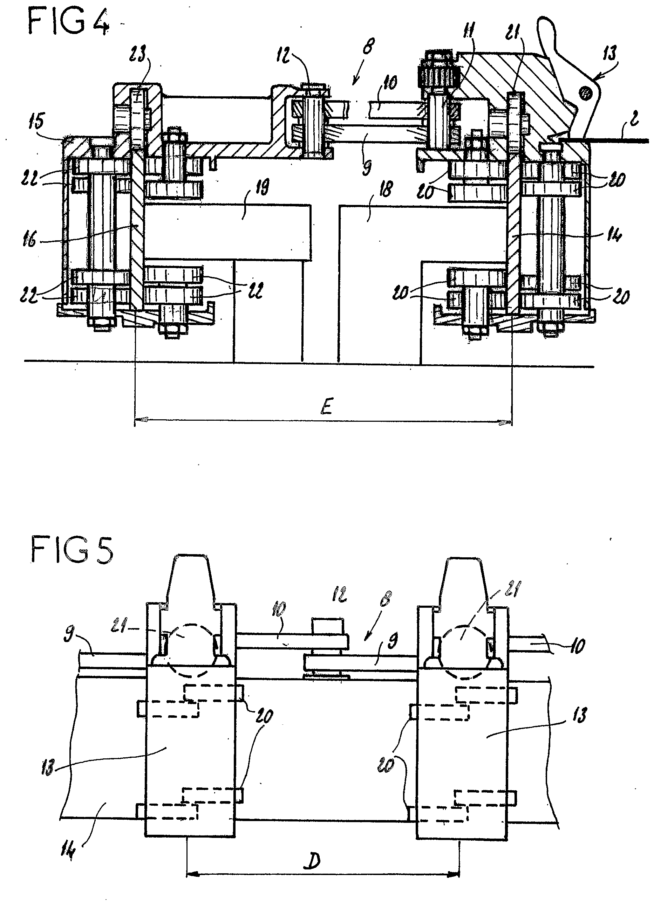

Les deux rails sont du type "monorail", en forme de plaque verticale, ces deux rails 14 et 16 pouvant être tenus, à une certaine distance l'un de l'autre (comme précisé plus bas), soit par des supports communs en forme de "T", soit par des supports distincts 18 et 19 (voir figure 4).

Chaque pince 13 possède un corps qui, à la manière d'un chariot, porte des galets 20 d'axes verticaux roulant sur les faces latérales du rail 14, et un galet 21 d'axe horizontal roulant sur le sommet du rail 14.

D'une manière similaire, chaque pièce de guidage 15 forme un chariot, muni de galets 22 d'axes verticaux roulant sur les deux faces latérales du rail 16, et d'un galet 23 d'axe horizontal roulant sur le sommet du rail 16.

Sur chaque corps de pince 13 et sur chaque pièce de guidage 15, les galets latéraux 20 et 22 comprennent ici, de chaque côté du rail 14 ou 16, deux galets supérieurs et deux galets inférieurs, les deux galets supérieurs pouvant présenter un léger décalage vertical, de même que les deux galets inférieurs, de manière à s'imbriquer, pour des raisons d'encombrement.

Les deux rails 14 et 16 possèdent un écartement variable, entre une valeur maximale E (voir figure 2, à gauche) et une valeur minimale e (voir figure 2, à droite), ces deux rails 14 et 16 pouvant être parallèles l'un à l'autre, ou aller en se rapprochant ou en s'écartant l'un de l'autre (voir figure 2, partie centrale). L'écartement des deux rails 14 et 16 détermine lui-même la distance entre deux pinces 13 successives.

En effet, si les deux rails 14 et 16 possèdent leur écartement maximal E, les maillons 9 et 10 de la chaîne 8 forment une structure en "zig-zag", imposée par l'écartement maximal entre l'alignement des pinces 13, d'une part, et l'alignement des pièces de guidage 15, d'autre part. La distance entre deux pinces 13 successives prend alors sa valeur minimale d.

Si les deux rails 14 et 16 sont parallèles et maintenus à leur écartement maximal E, la distance entre les pinces 13 successives reste elle aussi constante, et égale à sa valeur minimale d. Ceci est le cas, notamment, dans la zone de préchauffage 3.

A l'inverse, si les deux rails 14 et 16 possèdent leur écartement minimal e, les maillons 9 et 10 de la chaîne 8 se trouvent alignés, ce qui correspond à un écartement minimal entre l'alignement des pinces 13, d'une part, et l'alignement des pièces de guidage 15, d'autre part. La distance entre deux pinces 13 successives prend alors sa valeur maximale D.

Si les deux rails 14 et 16 sont parallèles et maintenus à leur écartement minimal e, la distance entre les pinces 13 successives reste elle aussi constante, et égale à sa valeur maximale D. Ceci est le cas, notamment, dans la zone de stabilisation 5 du film 2.

Par contre, il est aisément compréhensible que, lorsque l'écartement entre les deux rails 14 et 16 varie, la distance variable entre ces deux rails détermine aussi une variation de la distance entre les pinces 13 successives. En effet, la variation d'écartement entre les deux rails 14 et 16 commande l'ouverture ou la fermeture de l'angle entre les maillons successifs 9 et 10 de la chaîne 8, ce qui forcera deux pinces 13 successives à se rapprocher ou à s'éloigner.

En particulier, ceci trouve une application dans la zone d'étirage 4, où sur le trajet globalement divergent des deux chaînes 8, les deux rails 14 et 16 vont se rapprocher progressivement, provoquant ainsi une ouverture progressive de l'angle entre les maillons successifs 9 et 10, qui s'accompagne d'un éloignement progressif des pinces 13 successives, passant de la distance minimale d à la distance maximale D. En s'écartant ainsi les unes des autres, les pinces 13 assurent un étirage longitudinal du film 2, symbolisé en L, c'est-à-dire un étirage dans le sens de transport F de ce film 2. Simultanément, la divergence des deux chaînes 8 assure un étirage transversal du même film 2, symbolisé en T, dans la même zone 4, si bien que l'on obtient dans cette zone 4 l'étirage simultané souhaité.

On notera que, compte tenu du rapport entre la longueur des maillons 9, 10 de la chaîne 8 déployée et la longueur (en projection) des mêmes maillons en position repliée, le taux d'étirage longitudinal maximum est ici en pratique de l'ordre de cinq à six, ce qui est largement suffisant pour les opérations d'étirages courantes.

A la sortie de la zone d'étirage 4, si les deux rails 14 et 16 redeviennent parallèles entre eux et à la direction longitudinale de la machine, la stabilisation du film 2 se fera comme dans le cas d'un étirage séquentiel. Cependant, dans cette zone de stabilisation 5 également, la distance entre les deux rails 14 et 16 peut être variée, permettant une stabilisation du film 2 avec rétraction longitudinale ou extension longitudinale, par exemple une rétraction dans une zone partielle indiquée en 24 sur la figure 1.

Des moyens mécaniques peuvent être prévus pour modifier localement l'écartement des deux rails 14 et 16, et/ou leur angle de convergence, de manière à ajuster en cours de production les taux d'étirage longitudinal et transversal, les rails 14 et 16 étant prévus suffisamment déformables à cet effet. Cette ajustabilité constitue un avantage important.

Bien entendu, le dispositif comprend encore des roues dentées 25 d'entraînement de renvoi des chaînes 8, et des moyens appropriés de guidage des brins de retour de ces chaînes 8.

L'on ne s'éloignerait pas du cadre de l'invention, telle que définie dans les revendications annexées :
- par des modifications constructives de détail des chaînes, en particulier de leurs maillons ;
- par des modifications constructives et/ou fonctionnelles des pinces et des pièces de guidage, le guidage de ces pinces et autres pièces sur les rails pouvant se faire par roulement ou par glissement, simple ou double ;
- par des adaptations du trajet des chaînes et de leurs rails de guidage, en fonction des caractéristiques de l'installation, de la nature du film à étirer, et des taux d'étirage longitudinal et transversal souhaités.

## Revendications

1. Dispositif mécanique pour l'étirage simultané de films en matière synthétique dans le sens longitudinal et dans le sens transversal, avec utilisation de pinces successives (13) pour le maintien, le transport et l'étirage du film (2), les pinces (13) étant supportées et guidées par des rails (14), et entraînées en avant grâce à une chaîne sans fin (8) reliant entre elles les pinces (13), la chaîne sans fin (8) étant entraînée au moyen d'une ou plusieurs roues dentées (25), et comprenant, sur chaque côté du film (2) à étirer, une chaîne sans fin (8) guidée sur deux rails (14,16) d'écartement variable (E, e), la chaîne sans fin (8) étant constituée par une succession de maillons (9,10), articulés entre eux suivant des axes verticaux (11, 12), les pinces (13) étant liées à un axe (11) sur deux ou montées entre deux maillons (9, 10), **caracterisé en ce que** la chaîne sans fin (8) comprenant la succession de maillons (9, 10) articulés entre eux suivant des axes verticaux (11, 12) est entraînée en avant entre les deux rails (14, 16) de telle sorte que les pinces (13) dépassent sur un côté de la chaîne (8), en étant guidés sur l'un (14) des deux rails, tandis que des pièces de guidage (15) sont liées à un axe (12) sur deux ou montées entre deux maillons (10, 9), entre les pinces (13), dépassant sur le côté opposé de la chaîne et se déplacent sur l'autre (16) des deux rails, de telle sorte qu'en fonction de l'écartement (E, e) et/ou de la variation d'écartement de ces deux rails (14,16), les maillons successifs (9, 10) de la chaîne (8) soient en alignement ou forment au contraire des angles les uns par rapport aux autres, de manière à fixer et/ou modifier la distance (d, D) entre les pinces successives (13).

2. Dispositif d'étirage simultané selon la revendication 1, **caractérisé en ce que** les pinces (13) possèdent des corps articulés autour d'un sur deux (11) des axes d'articulation verticaux des maillons successifs (9,10) de la chaîne (8), tandis que les pièces de guidage (15) sont articulées autour des autres axes d'articulation verticaux (12) des maillons successifs (9,10) de la chaîne (8), situés entre les axes d'articulation précédents (11).

3. Dispositif d'étirage simultané selon la revendication 1 ou 2, **caractérisé en ce que** les deux rails (14,16) d'écartement variable (E, e) sont du type"monorail", et **en ce que** les corps des pinces (13) d'une part, et les pièces de guidage (15) d'autre part, sont munis de galets d'axes verticaux (20,22) roulant sur les deux faces latérales du rail correspondant (14,16), et
d'au moins un galet d'axe horizontal (21,22) roulant sur le sommet du rail correspondant (14,16).

4. Dispositif d'étirage simultané selon la revendication 3, **caractérisé en ce que**, sur chaque corps de pince (13) et sur chaque pièce de guidage (15), les galets latéraux (20,22) comprennent, de chaque côté du rail (14,16), deux galets supérieurs et deux galets inférieurs.

5. Dispositif d'étirage simultané selon la revendication 4, **caractérisé en ce que** les deux galets (20,22) supérieurs présentent un léger décalage vertical, de mme que les deux galets (20,22) inférieurs, de manière à s'imbriquer.

6. Dispositif d'étirage simultané selon l'une quelconque des revendications 1 à 5, **caractérisé en ce que**, notamment dans des portions divergentes des deux chaînes (8), placées de part et d'autre du film (2), les deux rails (14, 16) se rapprochent, de telle sorte que les angles entre les maillons successifs (9,10) de la chaîne (8) vont progressivement s'ouvrir, et les pinces successives (13) s'éloigneront les unes des autres, ce qui détermine un étirage du film (2) dans le sens longitudinal (L) et dans le sens transversal (T).

7. Dispositif d'étirage simultané selon la revendication 6, **caractérisé en ce que** les deux rails (14,16) sont parallèles entre eux et à la direction de transport (7) du film (2), et possèdent un écartement maximal (E), dans une zone de préchauffage (3) du film située en amont de la zone d'étirage (4), et **en ce que** ces deux rails (14,16) sont parallèles entre eux et à la direction de transport (F) du film (20), et possèdent un écartement minimal (e), dans une zone de stabilisation (5) située en aval de la zone d'étirage (4).

8. Dispositif d'étirage simultané selon l'une quelconque des revendications 1 à 7, **caractérisé en ce que** des moyens mécaniques sont prévus pour modifier localement l'écartement des deux rails (14,16), et/ou leur angle de convergence, de manière à ajuster en cours de production les taux d'étirage longitudinal et transversal.

## Patentansprüche

1. Mechanische Vorrichtung zum gleichzeitigen Recken von Folien aus einem synthetischen Material in Längsrichtung und in Querrichtung unter Verwendung von aufeinanderfolgenden Kluppen (13) für das Halten, den Transport und das Recken der Folie (2), wobei die Kluppen (13) gestützt und geführt werden von Schienen (14) und vorwärtsgezogen werden mittels einer Endloskette (8), die die Kluppen (13) miteinander verbindet, wobei die Endloskette (8) mittels eines oder mehrerer Zahnräder (25) gezogen wird, und umfassend auf jeder Seite der zu reckenden Folie (2) eine auf zwei Schienen (14, 16) mit variablem Abstand (E, e) geführte Endloskette (8), wobei die Endloskette (8) gebildet wird durch eine Folge von Kettengliedern (9, 10), die miteinander verbunden sind um vertikale Achsen (11, 12), wobei die Kluppen (13) an eine Achse (11) von zweien gebunden sind oder zwischen zwei Kettengliedern (9, 10) montiert sind, **dadurch gekennzeichnet, dass** die Endloskette (8), die die Folge von Kettengliedern (9, 10) umfasst, die miteinander um vertikale Achsen (11, 12) verbunden sind, zwischen den beiden Schienen (14, 16) in der Weise vorwärtsgezogen wird, dass die Kluppen (13) auf einer Seite der Kette (8) überstehen, wobei sie auf einer (14) der beiden Schienen geführt werden, wohingegen die Führungsstücke (15) mit einer Achse (12) von zweien verbunden sind oder zwischen zwei Kettengliedern (10, 9) zwischen den Kluppen (13) montiert sind, wobei sie auf der gegenüberliegenden Seite der Kette (8) überstehen und sich auf der anderen (16) der beiden Schienen fortbewegen, in der Weise, dass entsprechend dem Abstand (E, e) und/oder der Veränderung des Abstands dieser beiden Schienen (14, 16) die aufeinanderfolgenden Kettenglieder (9, 10) der Kette (8) in Fluchtlinie miteinander sind oder im Gegensatz dazu Winkel des einen in Bezug auf die anderen bilden, in der Weise, dass sie den Abstand (d, D) zwischen den aufeinanderfolgenden Kluppen (13) fixieren und/oder modifizieren.

2. Vorrichtung zum gleichzeitigen Recken nach Anspruch 1, **dadurch gekennzeichnet, dass** die Kluppen (13) Verbindungskörper um eine auf zwei (11) der vertikalen Verbindungsachsen der aufeinanderfolgenden Kettenglieder (9, 10) der Kette (8) besitzen, wohingegen die Führungsstücke (15) um die anderen vertikalen Verbindungsachsen (12) der aufeinanderfolgenden Kettenglieder (9, 10) der Kette (8) verbunden sind, die zwischen den vorgenannten Verbindungsachsen (11) gelegen sind.

3. Vorrichtung zum gleichzeitigen Recken nach Anspruch 1 oder 2, **dadurch gekennzeichnet, dass** die beiden Schienen (14, 16) mit variablem Abstand (E, e) Schienen des "einschienigen" Typs sind und dass die Kluppenkörper (13) einerseits und die Führungsteile (15) andererseits mit Rollen mit vertikalen Achsen (20, 22) versehen sind, die auf den beiden seitlichen Flächen der entsprechenden Schiene (14, 16) laufen, und wenigstens eine Rolle mit horizontaler Achse (21, 22) auf der Oberkante der entsprechenden Schiene (14, 16) läuft.

4. Vorrichtung zum gleichzeitigen Recken nach Anspruch 3, **dadurch gekennzeichnet, dass** auf jedem Kluppenkörper (13) und auf jedem Führungsteil (15) die seitlichen Rollen (20, 22) von jeder Seite der Schiene (14, 16) zwei obere und zwei untere Rollen umfassen.

5. Vorrichtung zum gleichzeitigen Recken nach Anspruch 4, **dadurch gekennzeichnet, dass** die beiden oberen Rollen (20, 22) einen leichten vertikalen Versatz präsentieren, genauso wie die beiden unteren Rollen (20, 22), in der Weise, dass sie einander übergreifen.

6. Vorrichtung zum gleichzeitigen Recken nach irgendeinem der Ansprüche 1 bis 5, **dadurch gekennzeichnet, dass** sich insbesondere in den auseinanderlaufenden Teilen der beiden Ketten (8), die jeweils auf einer der beiden Seiten der Folie (2) angeordnet sind, die beiden Schienen (14, 16) einander annähern, in der Weise, dass sich die Winkel zwischen den aufeinanderfolgenden Kettengliedern (9, 10) der Kette (8) stufenweise öffnen und sich die aufeinanderfolgenden Kluppen (13) voneinander entfernen, was ein Recken der Folie (2) in Längsrichtung (L) und in Querrichtung (T) veranlasst.

7. Vorrichtung zum gleichzeitigen Recken nach Anspruch 6, **dadurch gekennzeichnet, dass** die beiden Schienen (14, 16) parallel zueinander und in Richtung des Transports (7) der Folie (2) sind und einen maximalen Abstand (E) in einer Zone des Vorheizens (3) der Folie besitzen, die vor der Zone des Reckens (4) liegt, und dass die beiden Schienen (14, 16) parallel zueinander und in der Richtung des Transports (7) der Folie (20) sind und einen minimalen Abstand (e) in der Zone der Stabilisierung (5) besitzen, die hinter der Zone des Reckens (4) liegt.

8. Vorrichtung zum gleichzeitigen Recken nach irgendeinem der Ansprüche 1 bis 7, **dadurch gekennzeichnet, dass** mechanische Mittel zum lokalen Modifizieren des Abstands der beiden Schienen (14, 16) und/oder ihres Konvergenzwinkels vorgesehen sind, in der Weise, dass im Verlauf der Herstellung die Reckverhältnisse in Längsrichtung und in Querrichtung angepasst werden.

## Claims

1. A mechanical device for simultaneously drawing films made of a synthetic material in the longitudinal and transverse directions with a use of successive grippers (13) for holding, transporting and drawing the film (2), the grippers (13) being supported and guided by rails (14) and drawn forward by virtue of an endless chain (8) connecting the grippers (13) to each other, the endless chain (8) being driven by means of one or more sprockets (25), and comprising, on each side of the film (2) to be drawn, an endless chain (8) guided on two rails (14, 16) having variable distance (E, e), wherein the endless chain (8) consists of a succession of links (9, 10) articulated to one another about vertical axes (11, 12), the grippers (13) being connected to one axis (11) of two or mounted between two links (9, 10), **characterized in that** the endless chain (8) comprising the succession of links (9, 10) articulated to each other about vertical axes (11, 12) is drawn forward between the two rails (14, 16) in a manner that the grippers (13) protrude on one side of the chain (8) while being guided on one (14) of the two rails, whereas guide pieces (15) are connected to one axis (12) of two or mounted between two links (10, 9) between the grippers (13) and protrude on the opposite side of the chain (8) and move forward on the other one (16) of the two rails such that, in correspondence to the distance (E, e) and/or the variation of the distance of these two rails (14, 16), the successive links (9, 10) of the chain (8) are aligned or, to the contrary, form angles with respect to one another so as to fix and/or modify the distance (d, D) between the successive grippers (13).

2. The simultaneous drawing device according to claim 1, **characterized in that** the grippers (13) have bodies articulated about one of two (11) of the vertical articulation axes of the successive links (9, 10) of the chain (8), whereas the guide pieces (15) are articulated about the other vertical articulation axes (12) of the successive links (9, 10) of the chain (8) situated between the previous articulation axes.

3. The simultaneous drawing device according to claim 1 or 2, **characterized in that** the two rails (14, 16) of variable distance (E, e) are of the "monorail" type, and that the bodies of the grippers (13), on the one hand, and the guide pieces (15), on the other hand, are provided with rollers having vertical axes (20, 22) rolling along the two lateral faces of the corresponding rail (14, 16) and with at least one roller having a horizontal axis (21, 22) rolling on the upper top of the corresponding rail (14, 16).

4. The simultaneous drawing device according to claim 3, **characterized in that** the lateral rollers (20, 22) on each gripper body (13) and on each guide piece (15) comprise two upper rollers and two lower rollers on each side of the rail (14, 16).

5. The simultaneous drawing device according to claim 4, **characterized in that** the two upper rollers (20, 22) have a slight vertical offset, as have the two lower rollers (20, 22) so that they are imbricated.

6. The simultaneous drawing device according to any of the claims 1 to 5, **characterized in that**, particularly in the divergent portions of the two chains (8) placed on the respective two sides of the film (2), the two rails (14, 16) converge such that the angles between the successive links (9, 10) of the chain (8) will gradually open up, and the successive grippers (13) will diverge from one another, thus causing drawing the film (2) in the longitudinal direction (L) and in the transverse direction (T).

7. The simultaneous drawing device according to claim 6, **characterized in that** the two rails (14, 16) are parallel to one another and in the transport direction (7) of the film (2) and have a maximum distance (E) in a pre-heating zone (3) of the film situated upstream of the drawing zone (4), and that these two rails (14, 16) are parallel to one another and in the transport direction (7) of the film (2) and have a minimum distance (e) in a stabilization zone (5) situated downstream of the drawing zone (4).

8. The simultaneous drawing device according to any of the claims 1 to 7, **characterized in that** mechanical means are provided for locally modifying the distance of the two rails (14, 16) and/or their angle of convergence so as to adjust the longitudinal and transverse drawing ratios in the course of production.
